(19) Europäisches Patentamt
European Patent Office
Office européen des brevets

(11) **EP 3 558 032 B1**

(12) **EUROPEAN PATENT SPECIFICATION**

(45) Date of publication and mention
of the grant of the patent:
**04.03.2020 Bulletin 2020/10**

(21) Application number: **17808953.8**

(22) Date of filing: **08.12.2017**

(51) Int Cl.:
**A23L 29/281** (2016.01)   **A23L 23/10** (2016.01)

(86) International application number:
**PCT/EP2017/081967**

(87) International publication number:
**WO 2018/114383 (28.06.2018 Gazette 2018/26)**

(54) **FOOD CONCENTRATE**

LEBENSMITTELKONZENTRAT

CONCENTRÉ ALIMENTAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2016 EP 16205211**

(43) Date of publication of application:
**30.10.2019 Bulletin 2019/44**

(73) Proprietors:
• **Unilever N.V.**
**3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**
• **Unilever PLC**
**London, Greater London EC4Y 0DY (GB)**
Designated Contracting States:
**CY GB IE MT**

(72) Inventors:
• **LEMMERS, Marc**
**3133 AT Vlaardingen (NL)**
• **MELLEMA, Michel**
**3133 AT Vlaardingen (NL)**
• **MELWITZ, Dieter, Werner**
**74074 Heilbronn (DE)**
• **SCHMID, Hermann**
**74074 Heilbronn (DE)**

(74) Representative: **Tjon, Hon Kong Guno**
**Unilever Patent Group**
**Bronland 14**
**6708 WH Wageningen (NL)**

(56) References cited:
EP-A1- 1 273 239      WO-A1-2015/091220
WO-A1-2016/050456

**Description**

**Field of the invention**

The present invention is in the field of concentrated food compositions. It further relates to a process to prepare the same. It further relates to the use of said food composition for preparing a bouillon, a soup, a sauce, gravy or a seasoned dish.

**Background of the invention**

High-salt concentrate food compositions which after dilution in water or a dish result in a bouillon, a soup, a sauce, a gravy or a seasoned dish have been described. This class of products is known to the consumer as well as to the skilled person for many decades. They are known for example in the form of dry bouillon cubes or soup cubes or seasoning cubes. Concentrated products can be dry (e.g. dehydrated), liquid, semiliquid or paste-like products which, after the addition to water according to the directions for use, yield ready to eat preparations.

Recently, savoury concentrate food compositions became available which are in the form of a semi-solid or gel. Compared to traditional dry concentrates like bouillon cubes, these gelled concentrates can contain more water and are considered to have a more fresh appearance. Consumers like that a product "sets back" once pressed, showing elasticity, like a gel. This is often associated with fresh food of high quality (e.g. fresh fish, liver, meat), whereas a hard or pasty texture may be associated with non-fresh products that might have dried out.

Gelled savoury concentrates usually contain relatively high amounts of water and salt. The salt is added for taste reasons, but contributes as well to the microbiological stability of the gelled savoury concentrate. Compared to liquid concentrates, the gelled concentrates show the advantage that they are semi-solid, and sufficiently firm (also referred to in the art as self-sustaining, shape stable, soft-solid or semi-solid), and not too sticky and therefore can be unit dosed, like a traditional bouillon cube.

Gelled savoury concentrates rely on the presence of a gelling agent for their firm, semi-solid, gelled texture. A gelling agent may comprise one or more gelling and/or thickening agents which on their own or together provide the firm semi-solid gel texture.

For the application in high-salt food concentrates, the gelling agent should be compatible with high-salt levels. Most gelling agents that can form semi-solid gelled, ready to eat (low-salt levels) food products, appeared not compatible with the relatively high-salt levels, such as common in savoury food concentrates. At these high-salt levels many gelling agents appeared to behave very different than they do at low-salt levels. In a high-salt environment they might lose their texturing ability, or often do not form a gel at all, or show other significant disadvantages which make production of savoury high-salt gels at industrial scale far from attractive, if not impossible.

To achieve a gel structure using gelling agents that show sensitivity to high-salt conditions, the easiest solution would be to increase the gelling agent concentration. However, as a consequence of an increased gelling agent concentration other issues may appear. For some gelling agents, increasing their concentration to allow incorporation of creamy ingredients would cause processing problems due to a too high viscosity during processing. Also when the price of the gelling raw material is high, an increase of gelling agent concentration to sufficient level to counteract high-salt sensitivity or to incorporate creamy ingredients may lead to unaffordable recipe costs.

EP 672 354 relates to a "kokumi" imparting seasoning. Such materials are produced by heating a mixture selected from the group consisting of gelatine and tropomyosin and/or tropomyosin peptides, gelatine and paramyosin, and troponin and tropomyosin and/or tropomyosin peptides, and a low-molecular weight fraction of natural extracts, in water. In addition, the material obtained using mixture also produces a "steady and sharp" (or "consolidation") phenomenon.

JP2011-234654A relates to a new gummy candy-like structure, which has a gummy candy-like elasticity and a smooth texture, has good solubility in mouth, and is suitable for distribution for a long period at an ordinary temperature. The gummy candy-like structure comprises collagen peptide having an average molecular weight of not more than 20,000 g/mol in the solid content, oils and fats, gelatine of 100 to 350 bloom, and glycerol.

In WO2007/068483 and WO2007/068402, bouillon and seasoning products comprising gelatine and starch are disclosed. However, the combination of starch and gelatine usually leads to gels that are relatively sticky. There is a need in the art to provide a gelled food concentrate in a mono-dose format that is easy to remove from its packaging. Also, the presence of starch reduces processability (pumpability) in the factory, because of high viscosity obtained at high temperature. Finally, starch gels can be less elastic, hence have reduced 'set back' behaviour upon pressing.

WO2007/068484 discloses a gelled savoury concentrate comprising a gelling agent which contains a mixture of xanthan gum and locust bean gum. EP2468110 discloses a food composition comprising low-methoxy pectin. WO2012/062919 discloses a composition in the form of a gel comprising iota-carrageenan and xanthan gum.

WO2015/091220 describes a structured food concentrate comprising

- 1 to 30% by weight of gelatine based on the total water content of the food concentrate
- 20 to 75% by weight of an oil or fat based on the total weight of the food concentrate
- 15 to 40% by weight of salt based on the total water content of the food concentrate
- water

characterized in that the water:oil mass ratio is between 1:0.75 and 1:4.

WO 2016/050454 describes a gelled food concentrate comprising:

- 20-80wt% water by weight of the total food concentrate;
- an effective amount of gelatine wherein the amount of gelatine is effective when the value for [GE] in the formula below is in the range of 7.5 - 15wt% by weight of the food concentrate, where [GE] is defined as:

$$[GE] = \frac{[gelatine] \cdot \sqrt{B_2}}{\sqrt{250}},$$

  wherein [gelatine] is the concentration of gelatine in the food concentrate by weight based on water and B2 is the bloom strength of the gelatine in the food concentrate;
- 22.5wt% to 35wt% salt by weight of the total water content of the food concentrate ; and
- 1.5 wt% to 9 wt% by weight of the total water content of the food concentrate of amino acids, or derivatives, dissolved in water, the amino acids or derivatives, being selected from the following two groups:

  I. amino acids: histidine, arginine, iso-leucine, methionine and valine.
  II. derivatives of amino acids: creatinine, creatine and carnosine, or combinations thereof; and

wherein the value for [GE] plus the amount of (d) above is more than or equal to 12; and
wherein the gelatine is type A gelatine having an average bloom strength of at least 175.

WO 2016/050456 describes a gelled food concentrate comprising:

- 20-80wt% water by weight of the total food concentrate;
- an effective amount of gelatine wherein the amount of gelatine is effective when the value for [GE] in the formula below is in the range of 3.5 - 15wt% by weight of the food concentrate, where [GE] is defined as:

$$[GE] = \frac{[gelatine] \cdot \sqrt{B_2}}{\sqrt{250}},$$

  wherein [gelatine] is the concentration of gelatine in the food concentrate by weight based on water and B2 is the bloom strength of the gelatine in the food concentrate;
- 19wt% to 23wt% salt by weight of the total water content of the food concentrate ; and
- 0.4wt% to 9wt% by weight of the total water content of the food concentrate of total amino acids [AA-total], defined as amino acids or derivatives or combinations thereof, dissolved in water, wherein the total amino acid concentration [AA-total] is defined as [AA-total] = [arginine] + [histidine] + ½*[valine] + ½*isoleucine] + ½* [creatine] + [carnosine]; and wherein the combined value for [GE] and [AA-total] is more than or equal to 6; and wherein the gelatine is type A gelatine.

Despite the development of gelled concentrate food compositions which could be produced with the required high-salt level, it was experienced that these savoury concentrate food compositions show several disadvantages.

Present day consumers prefer natural ingredients in food products, especially ingredients that they are familiar with. One of the most common gelling agents available in concentrated foods is gelatine. Home-made stock, prepared from animal bones or carcasses, contains gelatine and when cooled down has a gel like appearance. Nevertheless, gelatine used as single gelling agent does not provide the required gelling in the presence of the high salt content needed for a savoury concentrate, unless very high concentrations of gelatine are used. It is therefore preferred to use a relatively low amount of gelatine, for cost reasons, but also to be able to incorporate more other ingredients, such as taste imparting ingredients, into the composition.

Gelatine has a lower gelling and melting temperature than other gelling agents. The use of gelatine as single gelling agent therefore has several benefits. It allows for a simplified processing of the gelled food concentrates, because lower temperatures are required to liquefy the product mix to be able to pump and fill the product. This has benefits for product quality, less heat impact, as well as for the total energy needed for production. Hence the use of gelatine as gelling agents has product quality, costs and sustainability benefits.

Another benefit of using gelatine as gelling agent is in the user application. Besides being more natural than many other gelling agents, the lower melting temperature implies fast dissolution of the gel into hot water. Moreover, the rate-limiting step in the disintegration of a gelatine gel is melting, and to a lesser extent dissolving. This also means that adding water is not crucial to its disintegration functionality, and it enables the use of the savoury food concentrate as seasoning in low water containing sauces, or even in a dry application, for example stirring the food concentrate through a risotto dish.

US 5780090 relates to food concentrates, in the form of traditional bouillon and seasoning cubes, comprising tripeptides containing hydrophobic amino acids for obtaining a savoury flavour or an umami flavour.

WO 2012/097930 relates to food concentrates in the form of gels, comprising an effective amount of gelling agent, including gelatine, salt, water, a liquid polyol and non-gelatinized starch. However, a food concentrate comprising high salt ($\geq$ 19wt% based on water) remains to be desired.

Similarly, WO 02/089608 describes the process to prepare a storage stable brown stock, containing meat extract, gelatine, vegetable juice concentrates and soup stock.

However, a gelatine based gelled food concentrate with a relatively high salt level remains to be desired.

It is therefore an object of the present invention to provide high salt structured food concentrates, based on gelatine, typically in the form of a gelled food concentrate.

It is therefore an object of the present invention to provide high salt structured food concentrates, based on gelatine, using low amounts of gelatine.

It is another object of the present invention to provide a shape-stable, low-sticky, gelled food concentrate.

It is another object of the present invention to provide lower temperature processing of a gelled food concentrate.

It is another object of the present invention to provide a natural gel system.

It is another object of the present invention to provide a gelled food concentrate that at the same time can be quickly dissolved in hot water and molten in applications without water.

Surprisingly it is found that at high salt concentrations, type A gelatine gels can be obtained at gelatine concentrations that would otherwise lead to gel-liquid phase separation by the addition of a non-gelling hydrolysed gelatine.

## Summary of the invention

Accordingly in a first aspect the invention provides a process of preparing a gelled food concentrate, said concentrate comprising:

a 20-80% by weight of water;
b 19-22.5% by weight of edible salt based on water, said edible salt being selected from sodium chloride, potassium chloride and combinations thereof;
c type A gelatine having a bloom strength of at least 80;
d non-gelling hydrolysed gelatine having a bloom strength of 0 and a molecular weight in the range of 10,000 to 40,000 g/mol; and

wherein the process comprises combining 100 parts by weight of water with X parts by weight of the type A gelatine and Y parts by weight of the non-gelling hydrolysed gelatine, wherein:

- $3.5 \leq X \cdot B_f \leq 18$
- $0.5 \leq Y \leq 22$
- $X \cdot B_f + Y \geq 10.8$
- $B_f = \dfrac{\sqrt{<B>}}{\sqrt{250}}$ and
- $<B>$ is the average bloom strength of the type A gelatine.

In a second aspect the invention provides a gelled food concentrate that is obtained by the aforementioned process.

In a third aspect the invention provides the use of the gelled food concentrate according to the invention, in the preparation of a bouillon, a soup, a sauce, gravy or a seasoned dish.

The term "gelled food concentrate" as used herein refers to a product that can be taken out of its packaging in one single piece, especially when the product has a temperature of 20 °C. That is, the gelled food concentrate should show some coherence, or elasticity, when removed from the packaging.

Whenever reference is made to an ingredient's concentration expressed as % by weight based on water, unless indicated otherwise, that ingredient concentration is calculated according to the following formula:

EP 3 558 032 B1

$$((\text{weight of ingredient}) / (\text{weight of ingredient} + \text{total weight of water}) *100.$$

For example 5 g salt in 20 g total water equates to a salt concentration of 20% by weight based on water.

For the avoidance of doubt, this invention relies on two types of gelatine, one is a gelling gelatine, and the other a non-gelling hydrolysed gelatine. The gelling gelatine is also referred to as gelatine, with the non-gelling hydrolysed gelatine is always referred to as non-gelling hydrolysed gelatine.

These and other aspects, features and advantages will become apparent to those of ordinary skill in the art from a reading of the following detailed description and the appended claims. The word "comprising" is intended to mean "including" but not necessarily "consisting of" or "composed of." All percentages are weight/weight percentages unless otherwise indicated. Numerical ranges expressed in the format "from x to y" are understood to include x and y. When for a specific feature multiple preferred ranges are described in the format "from x to y", it is understood that all ranges combining the different endpoints are also contemplated.

**Detailed description of the invention**

Accordingly, the invention provides a gelled food concentrate comprising water, an effective amount of gelatine, salt and non-gelling hydrolysed gelatine.

Without wishing to be bound by theory, it is thought that, when gelatine is used as a gelling agent, improved structuring or gelling is achieved, at low gelatine concentrations and despite high salt levels, by the additional presence of non-gelling hydrolysed gelatine having a molecular weight in the range of 10,000 to 40,000 g/mol and a bloom strength of 0.

Moreover, the presence of the non-gelling hydrolyse gelatine can improve the appearance of the food concentrate, for example by decreasing the turbidity, or increasing the transparency, or improving the dissolution of the final product.

Process for preparing the gelled food concentrate

The present process yields a gelled food concentrate comprising:

a. 20-80% by weight of water;
b. 19-22.5% by weight of edible salt based on water, said edible salt being selected from sodium chloride, potassium chloride and combinations thereof;
c. type A gelatine having a bloom strength of at least 80;
d. non-gelling hydrolysed gelatine having a bloom strength of 0 and a molecular weight in the range of at least 10,000 to 40,000 g/mol; and

This process comprises combining 100 parts by weight of water with $X$ parts by weight of the type A gelatine and $Y$ parts by weight of the non-gelling hydrolysed gelatine, wherein:

- $3.5\,X \cdot B_f \le 18$
- $0.5 \le Y \le 22$
- $X \cdot B_f + Y \ge 10.8$
- $B_f = \dfrac{\sqrt{<B>}}{\sqrt{250}}$ and
- $<B>$ is the average bloom strength of the type A gelatine.

The concentration of water in the gelled food concentrate refers to the total amount of water that is present in the concentrate. Said water concentration further refers to water *per se,* i.e. excluding solutes and suspended material. Likewise when reference is made to parts by weight of water these parts by weight also refer to water *per se.*

The combining of water, type A gelatine and non-gelling hydrolysed gelatine in the present process may be achieved by combining components that contain one or more of these three ingredients in combination with other ingredients. Water, for instance, can be provided in the form of an aqueous solution that contains salt and taste imparting ingredients. Water may also be combined with either the type A gelatine or the non-gelling hydrolysed gelatine before the remaining ingredients are added. Likewise, the present invention encompasses processes in which the type gelatine A and/or the non-gelling hydrolysed gelatine are pre-blended with other ingredients before being combined with the water.

In accordance with a preferred embodiment, the process of preparing a gelled food concentrate comprises combining 100 parts by weight of water with $X$ parts by weight of the type A gelatine, wherein $X \cdot B_f$ is at least 4. More preferably, $X \cdot B_f$ is at least 5, even more preferably at least 6 and most preferably at least 7. Typically, $X \cdot {}_{Bf}$ does not exceed 15, more preferably $X \cdot B_f$ does not exceed 13.

$B_f$ preferably is at least 0.78, more preferably at least 0.80 and most preferably at least 0.85.

According to another preferred embodiment, the process comprises combining 100 parts by weight of water with at least $Y$ parts by weight of the non-gelling hydrolysed gelatine, wherein $Y$ is at least 1. More preferably, $Y$ is at least 2, even more preferably at least 4, and most preferably at least 6.

The combination of the type A gelatine and the non-gelling hydrolysed gelatine is preferably applied in the present process in an amount such that $X \cdot B_f + Y \geq 11.5$, more preferably $12 \leq X \cdot B_f + Y \leq 30$, most preferably $13 \leq X \cdot B_f + Y \leq 25$.

The type gelatine A and the non-gelling hydrolysed gelatine are preferably combined in the present process in such amounts that $(X \cdot B_f)/Y \geq 1:4$. More preferably, $1:3 \leq (X \cdot \cdot B_f)/Y \leq 20:1$, most preferably $1:2 \leq (X \cdot B_f)/Y \leq 5:1$.

The process of preparing a gelled food concentrate preferably comprises the steps of:

a) preparing an aqueous solution of the type A gelatine and the non-gelling hydrolysed gelatine having a temperature of at least 40 °C, said aqueous solution containing less than 5% edible salt based on water;
b) adding edible salt to the aqueous solution to produce a salted solution having an edible salt concentration of 19-22.5% based on water; and
c) allowing the salted solution to form a gel.

The aqueous solution of gelatine and non-gelling hydrolysed gelatine is prepared at a temperature of at least 40 °C to ensure that the gelatine is properly dissolved. The aqueous solution of the type A gelatine and the non-gelling hydrolysed gelatine preferably has temperature of 45-80 °C, more preferably of 50-75 °C. The salt content of the aqueous solution preferably is less than 3% based on water, most preferably less than 1% based on water.

It is preferred that the aqueous solution of step a) and the salted aqueous solution of step b) are stirred to homogenisation.

In accordance with a particularly preferred embodiment, the salted solution is filled into a container prior to step c), so that the gelation occurs within said container.

The gelled food concentrate may optionally comprise oil or fat. The oil or fat is preferably added in the present form in liquid form. This may require that the oil of fat is melted before addition. Oil or fat may be added at any step of the present process, but it is preferred that oil or fat are only added after step a, most preferably between steps a and b.

In another advantageous embodiment of the present process, the preparation of the aqueous solutions comprises combining the type A gelatine in a pre-swollen state with the other components of the aqueous solution. More preferably the pre-swelling of the gelatine may be done together with the non-gelling hydrolysed gelatine. In a more preferred embodiment, the gelatine is pre-swollen in an aqueous solution containing the non-gelling hydrolysed gelatine before adding it to the mixture; this is preferably included in the scope of the present invention. The water used in pre-swelling is taken from the total water of the composition.

The salted solution of step b) is preferably pasteurised before step c). Preferably, the salted solution is also pasteurized before it is filled into a container. Ideally, the pasteurisation is done at a temperature of not more than 85°C, more preferably between 60-80 °C. Any conventional type of pasteurization is contemplated, including HTST (high temperature short time).

Gelatine is known in the art to be a slow gelling agent. Depending on the gelatine concentration, bloom strength, temperature and other internal or external factors, it may take hours to days to even weeks for the gel to form. In general the higher the temperature the longer it takes for the gelatine gel to form, and vice versa.

Unlike most other gelling agents, type A gelatine is easy to process and does not require complex processing equipment. This is partially due to the low melting temperature, which allows filling at low temperatures.

Gelled food concentrate

The gelled food concentrate of the present invention preferably is a gel at 20°C. The person of average skill in the art of food products recognizes a gel when he or she sees one. The appearance of a gel generally can be achieved in an aqueous environment when sufficient gelling agents are used in the formulation.

A gel will usually have a smooth surface appearance, may be shape-retaining at ambient temperature when exposed to gravity, but easily deformable (to some degree in an elastic way). The texture or rheology desired for the product according to the invention is preferably that of a gel. Regarding a gel, in scientific literature, e.g. "Das Rheologie Handbuch, Thomas Mezger, Curt R. Vincentz-Verlag, Hannover, 2000" a gel is typically defined by its ratio of elastic modulus G' to viscous modulus G". This allows it to distinguish between a highly viscous fluid, e.g. a paste and an elastic system of same viscosity e.g. a jelly. Thus the ratio of G':G" is greater than 1 for a gel. For the given product, a ratio of greater than 1 is suitable.

Without wishing to be bound by a theory, G' defines the degree to which a material responds in an elastic way to the applied deformation; this is effectively an energy storage modulus, defining the amount of energy absorbed and stored by the material, compared to the amount of energy applied to the material.

Without wishing to be bound by a theory, G" defines the degree to which a material responds in a viscous way to the applied deformation. G" can thus be seen as an energy loss modulus, defining the dissipation of energy upon the applied deformation of the material.

Thus, gels are viscoelastic materials that can behave fluid-like as well as solid-like, depending on the timescale that the material is probed.

In the context of the present invention, a gel is defined as a material that has a dominant elastic response upon probing the material on timescales of $(2\pi)^{-1}$ seconds (0.16 s) or lower, after the material has been kept at a temperature of 5 °C for at least 24 hours. Preferably, G' > G" for t < $(2\pi)^{-1}$ s at T = 5 °C for 24 h; and wherein G" is at least 0.1 Pa. Thus the ratio of the elastic modulus G' to the viscous modulus G" (G':G") is greater than 1 for a gel. It is preferred, however, that said ratio G':G" is greater than 3, more preferably it is greater than 5. Typically, the ratio G':G" is higher than 1 and lower than 1000.

Detailed information about testing conditions is given in the paragraph describing the rheological protocol herein below.

It is also preferred that the gelled food concentrate has a relatively low tendency to syneresis (water separation) and is preferably an elastic, not too rigid or brittle gel (as such will facilitate removal from its packaging; elastic and not too rigid or brittle can best be judged by hand-feel).

In the present invention, preferably, the food concentrate has a G' value of between 1 and 50000 Pa. Preferably, G' is lower than 20000 Pa, more preferably lower than 10000 Pa, even more preferably lower than 8000 Pa, even more preferably lower than 6000 Pa, even more preferably lower than 4000 Pa, even more preferably lower than 3500 Pa, even more preferably lower than 3000 Pa. G' is preferably higher than 5, more preferably higher than 10 Pa, even more preferably higher than 50 Pa.

The absolute value of the viscous modulus G" is preferably higher than 0.1 Pa, more preferably higher than 1 Pa, even more preferably, higher than 5 Pa.

Rheological data may be recorded in a standard lab rheometer, for example in an Anton Paar Physica MCR301 rheometer, or one of similar specifications and sensitivity. The samples are measured using a temperature controlled Couette geometry, also known as a cup-and-bob geometry, wherein the material properties are measured between two concentric cylinders of slightly different diameter.

More specifically, we used a serrated cup (C-CC17/T200/SS/P) of 18.085 mm diameter and a serrated bob of (CC17/P6) of 16.66 mm diameter. Hence the gap width is 0.713 mm.

The skilled person knows how to correctly operate the rheometer to obtain reliable rheological data. Data is obtained applying the following process:

- The gel is molten in the oven at 70 °C, which should take no more than 1 hour.
- The liquid is then transferred hot into the pre-heated (70 °C) cup of the Couette geometry.
- After correctly loading the sample and lowering the bob to the measuring position, the liquid is covered with a layer of mineral oil to minimize the effect of evaporation.
- Subsequently, the temperature of the sample is brought down to 5 °C with a rate of 2.5 °C/min, and the sample is subsequently kept at this temperature for 24 hours.
- During the lowering of the temperature and the 24 hours afterwards, the sample is probed for its visco-elastic properties by oscillating the bob with a frequency of 1 rad/s at a strain of 1%.

It is checked that a strain of 1% is in the linear visco-elastic regime at the applied frequency for the material under study.

Also it is desired that the gelled food concentrate is not too sticky (as such gelled food concentrate is likely to be handled by fingers and to allow easy removal from the packaging).

Preferably, the gelled food concentrate has a certain strength or firmness: preferably the strength should be such that the force (in gram) necessary for a plunger to penetrate 10 mm in a gelled food concentrate is typically above 2 g, preferably above 5 g, more preferably above 10 g.

Moreover, low to no phase separation is desired.

The firmness or gel strength may be measured using a texture analyser from Microstable Systems, model TA XT2, operating a 30 kg load cell, to measure the firmer gels, or a 500g load cell, to measure the weaker gels. A plunger is mounted with the following characteristics:

- diameter       0.5 inches, corresponding to 12.7 mm

(continued)

| • height | 35 mm |
|---|---|

• flat bottom and wall surface, sharp edges, plastics (Delrin) material

For optimal reproducibility, the sample should always be measured in the same type of container, i.e. the container should always be of the same dimensions, to minimize potential wall effects. In this analysis, plastic (PP) containers are used with the following dimensions:

| • bottom diameter: | 4.9 cm |
|---|---|
| • top diameter: | 5.2 cm |
| • height of the container: | 6.3 cm |

The applied filling height is 5 cm.

Measurements are done 2 weeks after preparation of the samples which are stored at room temperature. The TA-parameter measurement settings are:

| • Pre test speed: | 1 mm/s |
|---|---|
| • Test speed: | 0.5 mm/s |
| • Return speed: | 10 mm/s |
| • Target distance: | 15 mm |
| • Trigger force (auto): | 0.5 g (only with 30 kg load cell) |

Data recording is stopped at target. The shown force values (in grams) are taken from the recorded graph at 10 mm penetration depth. In case of using the 500 g load cell the automated trigger force is switched off. The value of the firmness at 10 mm penetration depth is then manually obtained from the generated data.

Gels in the context of the present invention are preferably shape stable at room temperature, but need not be necessarily, because very weak and non-shape stable food gels indeed exist and consumers are familiar with such weak gels. For example, when producing a 'stock' from scratch. Such a traditional stock will gel in the fridge, but not necessarily to the extent that this stock is shape stable when the stock pot is turned upside-down, certainly not when this is done at room temperature. Gelatine structured gels in high salt conditions may be weak gels.

The extent of gelling of such traditional stocks also depends on storage time. Time is an important parameter in gelling processes in general, and more specifically when working with natural gelling agents or biopolymers. It is known in the art that biopolymer networks keep developing over long times, known in the art as 'aging'.

Generally, gelation of the food concentrate of the present invention requires a maturation time ranging from a few hours to several days, or even weeks. From the perspective of convenience, it is preferred that the gels according to the invention reach the desired shape stability after not more than 1 month. The above indicated accelerated measurement method (at reduced temperature) is suitable for determining whether a composition will meet the desired shape stability after approximately 1 month at room temperature (20 °C).

Salt

The food concentrate according to the present invention is preferably a savoury concentrate product that may be used as to prepare for example a bouillon, a soup, a sauce, gravy or a seasoned dish. Generally, such a product is diluted, for example in water, or in a dish, for example in a liquid dish or in a sauce or in a vegetable dish or a rice dish, to obtain a food product which is ready for consumption. Inherently, the concentrated food composition according to the invention comprises a high salt content, to allow the conventional relatively high dilution factors, while maintaining a proper taste impact, but also to support microbiological stability of the concentrate over shelf-life.

To this end, the food concentrate according to the invention preferably comprises salt. Salt preferably comprises common salt also referred to as table salt and NaCl. In addition, part of the salt may comprise KCl or any low sodium mineral salt. Preferably at least 50 wt%, more preferably at least 80 wt% of the salt comprises NaCl, even more preferably the salt comprises more than 90 wt% of NaCl. Salt is preferably NaCl.

The gelled food concentrate comprises salt preferably in an amount of from 19% to 22.5% by weight based on the total water content of the concentrated food composition, preferably from 21% to less than 22.5% by weight based on the total water content of the concentrated food composition.

The water content of the gelled food concentrate preferably lies in the range of 30-80% by weight of the total composition, more preferably 40-75% by weight of the total composition and most preferably 45-70% by weight of the total composition.

The water activity $a_w$ of the total concentrate is preferably between 0.5 and 0.98; more preferably $a_w$ is higher than 0.5, more preferably more than 0.6, even more preferably more than 0.65, even more preferably more than 0.7 and preferably less than 0.98, more preferably less than 0.95, still more preferably less than 0.9, even more preferably less than 0.85, most preferably less than 0.80.

It is noted that high salt levels typically hamper the gelling ability of gelatine; it is the presence of the non-gelling hydrolysed gelatine that surprisingly counteracts the salt sensitivity of the gelling agent.

Gelatine

Gelatine is a well-known biopolymer generally perceived as an authentic cooking ingredient, known and appreciated by cooks around the world. It is an inherent ingredient of authentic bouillon cooked from scratch by cooking from animal carcasses and skin. Gelatine is known to have a low melting temperature, a fast and easy melting profile in application and it does not give much re-jellification in a consumer dish.

Two commercially available variants of gelatine exist: type A gelatine and type B gelatine. Gelatine is referred to as type A gelatine when the gelatine is obtained from the raw material via acid extraction. Gelatine is referred to as type B gelatine when the gelatine is obtained from the raw materials via alkaline extraction. The present invention applies only to type A gelatine. Pig skin is the most popular source of type A gelatine. However, also other sources of type A gelatine exist, such as pig bones, beef hides, beef bones or fish.

The gelatine that is suitable for use in the present invention is type A gelatine, preferably of pork origin.

It is preferred that the type A gelatine has a bloom strength of at least 100, more preferably between 120 and 350, even more preferably between 150 and 320, most preferably between 200 and 300.

Bloom is a well-known test to measure the strength of a gel or gelatine. The test determines the weight (in grams) needed by a probe (normally with a diameter of 0.5 inch) to deflect the surface of the gel 4 mm without breaking it. The result is expressed in Bloom (grades). It is usually between 30 and 300 Bloom. To perform the Bloom test on gelatine, a 6.67% gelatine solution is kept for 17-18 hours at 10°C prior to being tested.

Depending on the formulation of the concentrated food product, a certain bloom value could be preferred to achieve better product properties. The bloom strength of the gelatine may have an influence on the viscosity during processing, on the final gel structure and stability of the food concentrate, and on the dissolution properties.

It is known in the art (Handbook of Hydrocolloids) that a relationship exists between gel strength, the bloom value of gelatine and the concentration of gelatine. In general meaning that the lower the bloom value, the more one would need of it to obtain a gel of certain strength. This relationship in general also holds in our invention.

The general convention to switch between gelatines of different bloom value, keeping the gel strength equal, is given by:

$$C_1 \cdot \sqrt{B_1} = C_2 \cdot \sqrt{B_2} \qquad \text{Equation 1}$$

Where $C_1$ is the concentration of gelatine 1 and $B_1$ is the bloom value of gelatine 1, $C_2$ is the concentration of gelatine 2 and $B_2$ is the bloom value of gelatine 2.

The present process comprises combining 100 parts by weight of water with $X \cdot B_f$ parts by weight of the type A gelatine, wherein the bloom factor $B_f$ for a given gelatine of a certain bloom strength $B$ is derived from Equation 1:

$$B_f = \frac{\sqrt{B}}{\sqrt{250}}$$

Thus, the bloom factor $B_f$ of a type A gelatine having a bloom strength of 250 equals 1.0. A type A gelatine having a bloom strength of 160 has a $B_f$ of 0.8. A type A gelatine having a bloom strength of 300 has a $B_f$ of 1.1.

In case a mixture of type A gelatines is employed in the present process, the bloom factor $B_f$ is calculated as follows (gelatines not having the minimum bloom strength of the type A gelatine are disregarded):

$$B_f = \frac{\sqrt{<B>}}{\sqrt{250}}$$

wherein

$$\langle B \rangle = \frac{(X_1 \cdot B_1 + X_2 \cdot B_2 + \cdots + X_n \cdot B_n)}{(X_1 + X_2 + \cdots + X_n)}$$

wherein $B_1$ is the bloom strength of the first source of gelatine and $X_1$ is the parts by weight of the first source of type A gelatine per 100 parts by weight of water, $B_2$ is the bloom strength of the second source of gelatine and $X_2$ is the parts by weight of the second source of type A gelatine per 100 parts by weight of water, and $B_n$ is the bloom strength of the n-th source of gelatine and $X_n$ is the parts by weight of the $n$-th source of type A gelatine per 100 parts by weight of water.

The type A gelatine in the gelled food concentrate of the present invention typically has a molecular weight in excess of 40,000 g/mol as determined by SDS-PAGE analysis, using the appropriate size markers. Typically, the molecular weight distribution of the gelatine as determined by SDS-PAGE analysis shows a maximum above a molecular weight of 50,000 g/mol, more preferably above a molecular weight of 75,000 g/mol, even more preferably above a molecular weight of 100,000 g/mol and most preferably above a molecular weight of 150,000 g/mol.

## Non-gelling hydrolysed gelatine

The non-gelling hydrolysed gelatine employed in accordance with the present invention typically has a molecular weight, as determined by SDS-PAGE analysis of less than 35,000 g/mol, more preferably of less than 32,000 g/mol, even more preferably of less than 30,000 g/mol.

The molecular weight distribution of the non-gelling hydrolysed gelatine as determined by SDS-PAGE analysis typically shows a maximum in the range of 10,000-35,000 g/mol, more preferably in the range of 12,000-30,000 g/mol and most preferably in the range of 13,000-28,000 g/mol.

The non-gelling hydrolysed gelatine can be of any source. It does not matter if the non-gelling hydrolysed gelatine is of type A or type B origin, as explained above, nor does it matter if the non-gelling hydrolysed gelatine is of pork, beef or fish origin. The non-gelling hydrolysed gelatine can also be present in raw materials, for example in concentrated stocks or broths that can be obtained in the food industry.

Standard non-gelling hydrolysed gelatine is also referred as bloom 0 gelatine. Bloom 0 gelatine typically contains not more than minor amounts of free amino acids. Hence, the material is not fully hydrolysed to the degree that only amino acids are left. According to a preferred embodiment, the gelled food concentrate contains 0.5 to 15% by weight of the non-gelling hydrolysed gelatine based on water, more preferably 1 to 12% by weight of the non-gelling hydrolysed gelatine based on water, even more preferably 2 to 10% by weight of the non-gelling hydrolysed gelatine based on water. Most preferably, the concentrate contains the non-gelling hydrolysed gelatine in a concentration of 3% to 9% by weight based on water.

For obtaining a suitable gel, the combined concentration of the type A gelatine and the non-gelling hydrolysed gelatine preferably is more than or equal to 8% by weight based on water, more preferably at least 10% by weight based on water, most preferably at least 12% by weight based on water.

The gelled food concentrate of the present invention contains type A gelatine that is composed of high molecular material and non-gelling hydrolysed gelatine that is composed of material of substantially lower molecular weight. As a result, the total amount of gelatine material (hydrolysed and non-hydrolysed) present in the gelled food concentrate shows a bimodal molecular weight distribution (as determined by SDS-PAGE analysis) with a maximum above 50,000 g/mol and a maximum in the range of 10,000-35,000 g/mol. More preferably said bimodal distribution has maximum above 100,000 g/mol and a maximum in the range of 12,000-30,000 g/mol. Most preferably, the bimodal distribution has maximum above 150,000 g/mol and a maximum in the range of 13,000-28,000 g/mol.

## Taste imparting ingredients

The gelled food concentrate preferably contains at least 0.1% by weight of one or more taste imparting ingredients selected from sugars, edible acids and glutamate. Here the term sugars refers to monosaccharides, disaccharides, trisaccharides and combinations thereof. Preferably, the gelled food concentrate contains at least 0.2% by weight, more preferably 0.5 to 20% by weight, even more preferably 2 to 10% by weight of these taste imparting ingredients.

The combination of water, the edible salt, the type A gelatine, the non-gelling hydrolysed gelatine, and the taste imparting ingredients typically constitutes at least 40 wt.%, more preferably at least 50 wt.% and most preferably at least 70 wt.% of the gelled food concentrate.

The concentrate of the present invention preferably comprises one or more food ingredients selected from flavours, yeast extracts, herbs, spices, vegetables, meat, fish, meat extracts, nucleotides and colorants. These food ingredients may be added in powdery form, for example, vegetable powder and yeast extract, but also as liquid or pasty extracts. The aforementioned food ingredients are preferably present in an amount of from 0.1 to 60 wt%, more preferably at least 1%, still more preferably at least 2%, even more preferably at least 5% or even at least 10% by weight, but typically not more than 45%, more preferably not more than 30% still more preferably not more than 25 wt% or even not more than 20 wt% based on total weight of the concentrate.

It may be preferred that the food concentrate of the present invention comprises microbiologically active ingredients, such as preservatives or acids. Preservatives or acids may be for example lactic acid, citric acid, potassium sorbate or benzoate.

The food concentrate according to the invention may further comprise fillers as conventionally used in the field.

### Product

The weight of the concentrate in the form of a gel according to the present invention is preferably more than 2 g, preferably more than 5 g, even more preferably more than 10 g, most preferably higher than 15 g and preferably less than 10 kg, more preferably less than 1 kg, even more preferably less than 500 g, even more preferably less than 300 g, even more preferably less than 100 g, most preferably less than 50 g. Concentrates with a size of from 2 g to 300 g, preferably of from 10 g to 100 g, most preferably of from 15 g to 50 g are in particular suitable for, but not limited to, unit dosing and are preferably designed for single use.

The concentrate may also be a multi-dosing format, although the format is not limited to this. In this case the consumer can dissolve only part of the concentrate of the invention in an appropriate amount of liquid, by for example using a spoon or other suitable utensil. In case of a multi-dose format, the weight of the concentrate is preferably from 50 g to 1 kg, more preferably from 100 g to 700 g.

The concentrate according to the invention is preferably a bouillon, seasoning, soup, sauce, gravy, or meal maker concentrate. Dish specific seasonings are also contemplated.

### pH

The pH of the concentrate is typically within the range common in food applications, which is between 4 and 9, more preferably between 5 and 8. For the current invention, the texture, firmness and elasticity of the gelled food concentrate can be influenced by the pH value of the gelled food concentrate. It is up to the skilled person to optimize the pH to obtain the gelled food concentrate having the optimal combination of properties as desired by the purpose of the product.

### Optional ingredients

The composition of the packaged savoury food concentrate according to the invention may further comprise an additional binding agent, which purpose is to give improved texture in end application. With texture in end application is preferably meant a certain viscosity needed for specific applications like cooking soups, instant soups, or sauces.

This binding agent is selected from non-gelatinized starches or salt-sensitive texturing agents like gellan, alginate, iota-carrageenan, kappa-carrageenan, lambda-carrageenan, agar or mixtures of thereof, preferably gellan or alginate or mixtures of thereof, whereby preferably gellan is present in an amount of from 0.2 and 2.0 wt% and preferably alginate in an amount of between 1 and 8 wt%, preferably between 2 and 6 wt%, based on the weight of the gelled food concentrate.

If non-gelatinized starch is used as a binding agent, the starch does not give viscosity upon processing. Non-gelatinized starch starts to gelatinize and gives some viscosity to the dish as soon as the concentrate is diluted and heated to a certain temperature, as required for specific application.

In case of salt-sensitive texturing agents, they show texture enhancing behaviour once diluted, resulting in a reduced salt concentration, like it is the case in the final application.

With texture enhancing behaviour is meant that when the salt sensitive gum dissolved in an aqueous solution, it is able to give a gel-like texture to the final solution or to thicken the aqueous solution. At a salt concentration above a critical concentration like in the food concentrate as such, the salt-sensitive gum is not able to form a gel or to provide thickening, at least not to the extent observed in the absence of salt. This is especially preferred for fast dissolving gels, such as gelatine based gels, that release the binding agent quickly into the solution.

Additionally the composition may comprise oil and/or fat, which is optionally emulsified for a creamy appearance or taste perception.

### Description of the figures

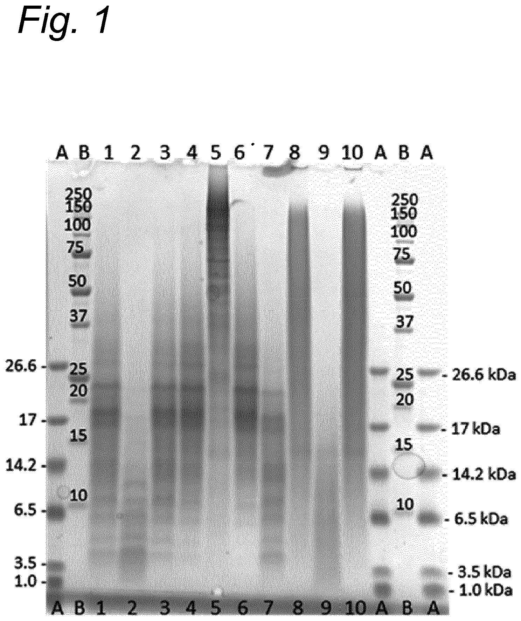

Figure 1 shows the image of the SDS-PAGE analysis, showing the molecular weight distributions of several non-gelling hydrolysed gelatine sources, as well as of gelatine 100 bloom.

**Examples**

The invention will now be illustrated by means of the following non-limiting examples.

The current invention relies on the use of non-gelling hydrolysed gelatine of molecular weight between 10 and 40 kg/mol. This non-gelling hydrolysed gelatine may be contained in a hydrolysed gelatine product that also contains gelatine material with a molecular weight that is outside the range of 10 to 40 kg/mol.

The concentration of non-gelling hydrolysed gelatine between 10 and 40 kg/mol, by weight based on water, is indicated as $[HG_{10-40}]$. To know $[HG_{10-40}]$ one needs to determine the fraction of a non-gelling hydrolysed gelatine that has a molecular weight in the range of 10-40 kg/mol. As known to the skilled person, this fraction may be obtained using standard protein analytical techniques, for example running a sample on a SDS-PAGE gel, using the appropriate size markers, to obtain the full molecular weight distribution of the non-gelling hydrolysed gelatine source.

Different types of non-gelling hydrolysed gelatine products may be employed in accordance with the present invention. As an alternative to standard non-gelling hydrolysed gelatine (bloom 0 gelatine), soup stock (ex Protell Foods AB) is used. Soup stock is a raw material that consists for 70 wt% of protein material. This protein material in soup stock is non-gelling hydrolysed gelatine. Another alternative to standard non-gelling hydrolysed gelatine is veal broth. Veal broth (ex Diana Naturals) is a raw material that consist for 43 wt% of protein. The total non-gelling hydrolysed gelatine content of the veal broth is 32 wt%. Hence, both raw materials can be considered as alternative sources of non-gelling hydrolysed gelatine.

We have analysed non-gelling hydrolysed gelatine as it is, as well as in different fractions, and soup stock using the following method described below. As control we have also loaded the SDS-PAGE gel with a gelatine (pork, type A) bloom 100 sample.

We prepared several fractions of the standard non-gelling hydrolysed gelatine. We did so using molecular weight cut-off filters applying the following protocol:

- 20 gram of portions of gelatin bloom 0 (pork, type A) were dissolved in 200 ml milliQ water.
- After dissolving, the mixtures were transferred into an Amicon membrane filter unit. This filter unit was equipped with an Ultrafiltration membrane filter of regenerated cellulose. The filters applied are either a Millipore PLBC07610, NMWL 3000 Da filter in case of fraction 1 and a Millipore, PLCC07610, NMWL 5000 Da filter for fraction 2.
- The mixture was fractionated by applying a nitrogen pressure of 5 bar.
- After approximately 2 hours the mixture became viscous and was hard to stir. Hence, 2 times a portion 100 ml milli-Q water was added with in between stirring for 3 hours.
- The mixture passed through the membrane filter is collected and freeze dried.
- The residue is also collected and freeze dried.

It is noted that the filter cut off is not directly corresponding with the actual measured molecular weight of the sample (see table 0).

Hence, we obtained two fractions, non-gelling hydrolysed gelatine fraction 1, which is the material that passed through the 3 kg/mol filter. We also obtained non-gelling hydrolysed gelatine fraction 2, which is the material that did not pass through the 5 kg/mol filter.

The molecular weight distribution of the fractions as well as of the unfractionated raw materials was determined using SDS-PAGE analysis. The following protocol was applied:

SDS-PAGE was performed on a criterion system (Bio-rad) with Criterion™ TX 12% bis-tris precast gels according to the manual (Bio-rad, Bulletin 4110001 Rev E US/EG). Samples were thawed and heated at 65 °C for 10 min, whereas the ultra-low molecular weight marker was heated at 65 °C for and 2 min. The gel was run for 40-45 min under a constant voltage of 200 V.

After running, the gel was washed for 5 minutes with purified water to remove SDS and background staining. Peptides were fixated by incubating the gel in 5% glutaric dialdehyde solution for 60 minutes. Excess fixation solution was removed by washing the gel twice with purified water for 5 min. Proteins and peptides were visualized using EZBlue Gel Staining Reagent (Sigma-Aldrich, G1041) using the staining protocol as given by the supplier. The resulting SDS-PAGE gel image can be found in figure 1. Here's the explanation of the relevant different lanes:

- A is a low molecular weight marker, 1.0 - 26.6 kg/mol;
- B is a high molecular weight marker, 10 - 250 kg/mol;
- 1 is non-gelling hydrolysed gelatine (Bloom 0, pork, type A) as is;
- 2 is fraction 1, meaning the protein material that passed through the 3 kg/mol filter;
- 5 is the gelatine 100 bloom (pork type A) as is;
- 6 is fraction 2, meaning the protein material that did not pass through the 5 kg/mol filter;
- 8 is soup stock as is;

- Lines 3, 4, 7, 9 and 10 are controls.

The image of figure 1 was further processed and analysed by image analysis methods as known to the skilled person to obtain the relative weight fractions of material that is between 10 and 40 kg/mol. Analysis of the SDS-PAGE image results in the properties described in table 0. The skilled person is aware of methods for correlating SDS-PAGE colour intensity to a relative concentration. The results obtained by this analysis are specific for a particular type or batch of non-gelling hydrolysed gelatine. Other types and batches of non-gelling hydrolysed gelatine may give different results.

**Table 0:** Properties of the used non-gelling hydrolysed gelatine sources as well as of gelatine with bloom strength 100

| Ingredient | purity | 10 - 40 kg/mol |
|---|---|---|
| | % | % |
| Bloom 0 (type A, pork) | 95 | 70 |
| soup stock | 70 | 55 |
| bloom 100 (type A, pork) | 85 | 40 |
| Bloom 0 fraction 1 : | 50 | 50 |
| Bloom 0 fraction 2: | 100 | 75 |

We define the total concentration of non-gelling hydrolysed gelatine as [HG], which is expressed as weight percent based on the total water content of the gelled food concentrate. A concentrate that is prepared by combining 1 part by weight of non-gelling hydrolysed gelatine of bloom strength 0 (purity 95%) with 9 parts of water has a concentration [HG] that equals $((1 \times 0.95) / (9 + 1 \times 0.95)) \times 100\% = 9.6$wt% based on water.

The concentration of peptides that have the appropriate molecular weight, determined as described above, is defined as $[HG_{10-40}]$ and is also expressed as weight percent based on the total water content of the gelled food concentrate. A concentrate that is prepared by combining 1 part by weight of non-gelling hydrolysed gelatine of bloom strength 0 (purity 95%, 70% 10-40 kg/mol) with 9 parts of water has a concentration $[HG_{10-40}]$ that equals $((1 \times 0.95 \times 0.7) / (9 + (1 \times 0.95 \times 0.7))) \times 100\% = 6.9$wt% based on water.

In the following examples 1 to 6, the non-gelling hydrolysed gelatine content of the non-gelling hydrolysed gelatine source reflects the actual amount of non-gelling hydrolysed gelatine present in the composition. In examples 7 and 8 the amounts are given as raw materials.

The gelatines used in the examples have a purity of approximately 85%. The values in examples 1 to 6 are corrected for the purity and reflect the actual amount of gelatine present in the composition. In examples 7 and 8 the amounts are given as raw materials.

Example 1: Gelling by gelatine and non-gelling hydrolysed gelatine

Here we show the principle of the unexpected synergistic effect between gelatine and non-gelling hydrolysed gelatine as defined in the claims. The gelatine used is Gelita pork skin type A gelatine of 250 bloom. Hence $B_f = 1$.

The non-gelling hydrolysed gelatine used is of similar origin and has a bloom value of 0. The salt concentration in this example is fixed at 22wt% NaCl based on water. The concentrations of the gelatine ([GE]) and non-gelling hydrolysed gelatine ([HG]) as mentioned in table 1 are expressed as weight percent based on water (wt%(aq)).

Accordingly, in order to prepare an aqueous solution having a gelatine concentration [GE] of 10 wt.%(aq), 1 part by weight of pure gelatine needs to be combined with 9 parts by weight of water. In other words, 11.1 parts by weight of pure gelatine needs to be combined with 100 parts by weight of water to obtain a gelatine concentration [GE] of 10 wt.%(aq). The same holds for the concentration of non-gelling hydrolysed gelatine [HG] and the concentration of non-gelling hydrolysed gelatine having a molecular weight in the range of 10,000-40,000 g/mol $[HG_{10-40}]$.

The samples were prepared according to the following protocol:

a) Introduce the water into a pan
b) Add the non-gelling hydrolysed gelatine to the water
c) Add the type A gelatine to the water/non-gelling hydrolysed gelatine mixture
d) Leave the mixture for at least 5 minutes, to allow the gelatine to take up the water and swell
e) Heat the mixture on a stove, while gently stirring with a whisk to avoid the creation of foam, to a temperature of approximately 70 °C, making sure the temperature does not exceed the 75 °C, until the gelatine is dissolved and the aqueous mixture appears to be homogeneous.

f) Add other ingredients of the formulation, except the salt, while keeping the mixture around 70 °C, and stir gently with a whisk to avoid the creation of foam, until the aqueous mixture appears to be homogeneous.

g) Add the salt while gently stirring with a whisk, to avoid the creation of foam, while the mixture is still around 70 °C, until the salt is dissolved and the mixture appears to be homogeneous.

h) Take the pan from the stove and add water to compensate for the water loss by evaporation during the heating of the mixture, and gently stir the mixture with a whisk to avoid the creation of foam, until the mixture appears to be homogeneous.

i) Pour the mixture into a container and close the container.

j) Leave the mixture in the container to cool down to room temperature quiescently.

Samples were stored at room temperature for 4 weeks, before evaluating their appearance. The results can be found in Table 1.

Table 1

| [GE] wt% (aq) | Non-gelling hydrolysed gelatine source | [HG] wt% (aq) | [HG$_{10-40}$] wt%(aq) | $X \cdot B_f + Y^1$ | Physical appearance | Success | G'/G" |
|---|---|---|---|---|---|---|---|
| 4.3 | - | 0 | 0 | $4.5 \cdot 1 + 0$ = 4.5 | Gel and liquid phase | No | - |
| 8.5 | - | 0 | 0 | $9.3 \cdot 1 + 0$ = 9.3 | Phase separated gel | No | - |
| 12.8 | - | 0 | 0 | $14.7 \cdot 1 + 0$ = 14.7 | Phase separated gel | No | - |
| 0 | Pork, type A (ex. Gelita) | 9.5 | 6.8 | $0 \cdot 1 + 7.3$ = 7.3 | One phase liquid | No | - |
| 0 | Pork, type A (ex. Gelita) | 19 | 14.1 | $0 \cdot 1 + 16.4$ = 16.4 | One phase liquid | No | - |
| 0 | Pork, type A (ex. Gelita) | 28.5 | 21,8 | $0 \cdot 1 + 27.9$ = 27.9 | One phase liquid | No | - |
| 0 | Soup Stock (ex Protell Foods AB) | 14 | 8.2 | $0 \cdot 1 + 9$ = 9 | One phase liquid | No | - |
| 2.6 | Pork, type A (ex. Gelita) | 19 | 14.1 | $2.7 \cdot 1 + 16.4$ = 19.1 | One phase liquid | No | - |
| 4.3 | Soup Stock (ex Protell Foods AB) | 21 | 1.2 | $4.5 \cdot 1 + 1.2$ = 5.7 | Gel and liquid phase | No | - |
| 43 | Pork, type A (ex. Gelita) | 9.5 | 6.8 | $4.5 - 1 + 7.4$ = 11.9 | One phase gel | Yes | 145/5.4 = 27 |
| 4.3 | Pork, type A (ex. Gelita) | 14.3 | 10.5 | $4.5 \cdot 1 + 11.7$ = 16.2 | One phase gel | Yes | 28.5/3.45 = 8.3 |
| 8.5 | Pork, type A (ex. Gelita) | 48 | 3.4 | $9.3 \cdot 1 + 3.5$ = 12.8 | One phase gel | Yes | 751/21 9 = 34 |

(continued)

| [GE] wt% (aq) | Non-gelling hydrolysed gelatine source | [HG] wt% (aq) | [HG$_{10-40}$] wt%(aq) | $X \cdot B_f + Y^1$ | Physical appearance | Success | G'/G" |
|---|---|---|---|---|---|---|---|
| 8.5 | Soup Stock (ex Protell Foods AB) | 7 | 4.0 | 9.3 · 1 + 4.1 = 13.4 | One phase gel | Yes | 1257/41 = 31 |
| 12.8 | Pork, type A (ex. Gelita) | 1 | 0.7 | 14.7 · 1 + 0.7 = 15.4 | One phase gel | Yes | 1410/40.9 = 35 |
| 12.8 | Soup Stock (ex Protell Foods AB) | 2.1 | 1.2 | 14.7 · 1 + 1.2 = 15.9 | One phase gel | Yes | 2540 185.6 = 30 |
| [1] $X$ and $Y$ each being calculated as parts by weight per 100 parts by weight of water | | | | | | | |

The results show that one phase gels can be prepared combining gelatine and non-gelling hydrolysed gelatine sources, within the concentration ranges according to the invention, while outside those boundaries, they do not result in a gel.

The parameter $X \cdot B_f + Y$ is calculated as follows for a concentrate having: [GE] = 8.5 wt%(aq), $B_f$ = 1 and [HG$_{10-40}$] = 3.4 wt%(aq):

$$X = (100 \times 0.085)/(1 - 0.085) = 9.3$$

$$Y = (100 \times 0.034)/(1 - 0.034) = 3.5$$

$$X \cdot B_f + Y = 9.3 \cdot 1 + 3.5 = 12.8$$

Example 2: Gelatine source and type

In this example different types of gelatines are compared. The bloom strengths of the different gelatines used in this example are comparable, 250±10 bloom strength. The non-gelling hydrolysed gelatine used is of pork origin, type A, and has a bloom value of 0. The salt concentration in this example is fixed at 22wt% NaCl based on water. The concentrations of the gelatine and non-gelling hydrolysed gelatine [HG], as mentioned in table 2, are expressed as weight percent based on water (wt%(aq)). The samples were prepared according to the processing steps described in Example 1. Samples were stored at room temperature for 4 weeks, before evaluating their appearance.

Table 2:

| Gelatine concentration wt%(aq) | Gelatine source and type | [HG] wt%(aq) | Physical appearance | Success? |
|---|---|---|---|---|
| 12.8 | Beef; type B | 9.5 | One phase liquid | No |
| 12.8 | Pork; type B | 9.5 | One phase liquid | No |
| 8.5 | Beef; type A | 4.8 | One phase gel | Yes |
| 12.8 | Beef; type A | 1 | One phase gel | Yes |
| 4.3 | Pork; type A | 9.5 | One phase gel | Yes |
| 8.5 | Pork; type A | 4.8 | One phase gel | Yes |
| 12.8 | Pork; type A | 1 | One phase gel | Yes |

The results in the table above show that only type A gelatine has the desired effect.

Example 3: Gelatine bloom strength

In this example gelatines of different bloom strengths are compared. Bloom strength and concentration are related, see equation 1. All gelatines used are supplied by Gelita and are pork type A gelatines. The salt concentration is fixed at 22wt% NaCl based on water. The concentrations of the gelatine and non-gelling hydrolysed gelatine [HG] as mentioned in table 3 are expressed as weight percent based on water (wt%(aq)). The samples were prepared according to the processing steps described in Example 1. Samples were stored at room temperature for 4 weeks, before evaluating their appearance.

The samples indicated with 'Mix' were a 1:1:1 mix of bloom strengths 300, 160 and 100, such that the total amount of gelatine in the samples was 8.5 wt%, based on water. To obtain a gelatine concentration of 8.5 wt%, based on water, 9.3 parts by weight of gelatine needs to be combined with 100 parts of water.

The bloom factor of the gelatine mix is calculated as follows:

$$B_f = \frac{\sqrt{<B>}}{\sqrt{250}} = \frac{\sqrt{187}}{\sqrt{250}} = \frac{13.7}{15.8} = 0.86$$

$$<B> = \frac{(X_1 \cdot B_1 + X_2 \cdot B_2 + \cdots + X_n \cdot B_n)}{(X_1 + X_2 + \cdots + X_n)} = \frac{(3.1 \cdot 100 + 3.1 \cdot 160 + 3.1 \cdot 300)}{(3.1 + 3.1 + 3.1)} = \frac{1736}{9.3} = 187$$

Table 3:

| Gelatine wt% (aq) | Bloom strength | $B_f$ | [HG] wt%(aq) | [HG$_{10-40}$] wt% (aq) | $X \cdot B_f + Y$[1] | Physical appearance | Success? |
|---|---|---|---|---|---|---|---|
| 4.3 | 300 | 1.10 | 0 | 0 | $4.5 \cdot 1.10 + 0$ = 4.9 | Phase separated gel | No |
| 4.3 | 300 | 1.10 | 9.5 | 6.8 | $4.5 \cdot 1.10 +$ 7.4 = 12.3 | One phase gel | Yes |
| 8.5 | 250 | 1.00 | 0 | 0 | $9.3 \cdot 1 + 0 =$ 9.3 | Phase separated gel | No |
| 8.5 | 250 | 1.00 | 4.8 | 3.4 | $9.3 \cdot 1 + 3.5$ = 12.8 | One phase gel | Yes |
| 8.5 | 160 | 0.80 | 0 | 0 | $9.3 \cdot 0.80 + 0$ = 7.4 | Phase separated gel | No |
| 8.5 | 160 | 0.80 | 4.8 | 3.4 | $9.3 \cdot 0.80 +$ 3.5 = 10.9 | One phase gel | Yes |
| 8.5 | 100 | 0.63 | 0 | 0 | $9.3 \cdot 0.63 + 0$ = 5.9 | Phase separated gel | No |
| 8.5 | 100 | 0.63 | 4.8 | 3.4 | $9.3 \cdot 0.63 +$ 3.5 = 9.4 | One phase liquid | No |
| 12.8 | 100 | 0.63 | 4.8 | 3.4 | $14.7 \cdot 0.84 +$ 3.5 = 12.8 | One phase gel | Yes |
| 8.5 | Mix | 0.86 | 0 | 0 | $9.3 \cdot 0.86 + 0$ = 8.0 | Phase separated gel | No |
| 8,5 | Mix | 0.86 | 4.8 | 3.4 | $9.3 \cdot 0.86 +$ 3.5 = 11.5 | One phase gel | Yes |
| [1] X and Y each being calculated as parts by weight per 100 parts by weight of water | | | | | | | |

The results in the table above show that one phase gels can be made if gelatines of different bloom strength are used and even if combinations of gelatines of different bloom strengths are used, as long as $X \cdot B_f + Y \geq 10.8$.

Example 4: Type of hydrolysed protein

In this example non-gelling hydrolysed gelatine is compared to other meat protein sources, as well as other hydrolysed protein sources. The gelatine used is Gelita pork skin type A gelatine of 250 bloom. The salt concentration in this example is fixed at 22wt% NaCl based on water. The concentrations of the gelatine and (hydrolysed) proteins material as mentioned in table 4 are expressed as weight percent based on water (wt%(aq)). The samples were prepared according to the processing steps described in Example 1. Samples were stored at room temperature for 4 weeks, before evaluating their appearance.

Table 4:

| Gelatine wt% (aq) | (Hydrolyzed) protein source | (Hydrolysed) protein wt%(aq) | Physical appearance | Success |
|---|---|---|---|---|
| 12.8 | - | 0 | Phase separated gel | No |
| 4.3 | Pork protein (Scanpro 1015F, 70% protein, ex BHJ) | 10 | Gel phase + liquid phase | No |
| 4.3 | Beef extract (ex JBA SA, 56% protein) | 10 | Gel phase + liquid phase | No |
| 4.3 | Hydrolyzed wheat gluten (Hyfoama 77, ex Kerry) | 10 | Gel phase + liquid phase | No |
| 8.5 | Hydrolyzed wheat gluten (Hyfoama 77, ex Kerry) | 2 | Gel phase + liquid phase | No |
| 8.5 | Hydrolysed milk protein (Hygel82913, ex. Kerry) | 2 | Gel phase + liquid phase | No |
| 8.5 | Hydrolysed milk protein (Hyfoama DSN, ex. Kerry) | 10 | Gel phase + liquid phase | No |
| 8.5 | Hydrolysed milk protein (Hyfoama DSN, ex. Kerry) | 2 | Gel phase + liquid phase | No |
| 8.5 | Hydrolysed pea protein (Hyfoama PW, ex. Kerry) | 2 | Gel phase + liquid phase | No |
| 8.5 | Hydrolysed soy protein (Versa-whip, ex. Kerry) | 2 | Gel phase + liquid phase | No |
| 4.3 | Hydrolysed gelatine (type A, ex Gelita) | 9.5 | One phase gel | Yes |
| 8.5 | Hydrolysed gelatine (type A, ex Gelita) | 4.8 | One phase gel | Yes |
| 8.5 | Soup Stock (ex Protell Foods AB) | 7 | One phase gel | Yes |

The results in the table above demonstrate that only non-gelling hydrolysed gelatine gives the desired effect of gel formation at high salt concentrations, while the other tested (hydrolysed) protein sources do not provide the gelling effect.

Example 5: Hydrolysed gelatine sources, types and concentrations.

In this example we show that the addition of non-gelling hydrolysed gelatine gives the unexpected effect regardless of type and origin of the non-gelling hydrolysed gelatine. The gelatine used is Gelita pork skin type A gelatine of 250 bloom. The salt concentration in this example is fixed at 22wt% NaCl based on water. The concentrations of the gelatine and non-gelling hydrolysed gelatine material ([HG]), as mentioned in table 5, are expressed as weight percent based on water (wt%(aq). The samples were prepared according to the processing steps described in Example 1. Samples were stored at room temperature for 4 weeks, before evaluating their appearance. The table also shows an example with non-gelling fish based material.

The examples in the table below are prepared such that the non-gelling hydrolysed gelatine content of these raw materials is taken into account. For example, 10wt% of soup stock based on water, yields 7wt% of non-gelling hydrolysed gelatine from soup stock origin based on water.

Table 5:

| Gelatine concentration wt% (aq) | Hydrolysed gelatine source | [HG] wt%(aq) | Physical appearance | Success? |
|---|---|---|---|---|
| 12.8 | - | 0 | Phase separated gel | No |
| 12.8 | Pork; type A (ex Gelita) | 1 | One phase gel | Yes |
| 8.5 | Pork; type A (ex Gelita) | 4.8 | One phase gel | Yes |
| 8.5 | Beef; type B (ex Gelita) | 4.8 | One phase gel | Yes |
| 8.5 | Fish; type A | 4.8 | One phase gel | Yes |
| 12.8 | Soup stock (ex Protell Foods AB) | 10.5 | One phase gel | Yes |
| 12.8 | Soup stock (ex Protell Foods AB) | 2.1 | One phase gel | Yes |
| 8.5 | Soup stock (ex Protell Foods AB) | 7 | One phase gel | Yes |
| 4.3 | Veal Broth (ex Diana Naturals) | 10 | One phase gel | Yes |

The results in the table above show that all sources of non-gelling hydrolysed gelatine give the desired effect, irrespective of their animal origin and extraction method. In other words, gelatine bloom 250 bloom type A of pork origin gels at high salt conditions in the presence of non-gelling hydrolysed gelatin type B of beef origin.

Example 6: Hydrolysed gelatine - molecular weight.

To show the molecular weight borders that define our claimed range, we combine gelatine 250 bloom with several other components:

- Fully hydrolysed gelatine.
- Gelatine bloom 0 fraction 2 (see table 0)
- Gelatine bloom 100

The gelatine used in this example is Gelita pork skin type A gelatine of 250 bloom, hence $B_f$ = 1. The salt concentration in this example is fixed at 22wt% NaCl based on water. The results of the samples prepared using different molecular weights of non-gelling hydrolysed gelatine is given in table 6.2. The concentrations of the gelatine and (hydrolysed) gelatine material as mentioned in table 6.2 are expressed as weight percent based on water (wt%(aq)). The samples were prepared according to the processing steps described in Example 1. Samples were stored at room temperature for 4 weeks, before evaluating their appearance.

Table 6.1:

| Amino Acid | Commercial bloom 0 non-gelling hydrolyzed gelatine wt% |
|---|---|
| Hydroxyproline | 11.3 |
| Aspartic acid | 5.8 |
| Serine | 3.2 |
| Glutamic acid | 10.1 |
| Glycine | 22.1 |
| Histidine | 1.2 |

(continued)

| Amino Acid | Commercial bloom 0 non-gelling hydrolyzed gelatine *wt%* |
|---|---|
| Arginine | 7.8 |
| Threonine | 1.8 |
| Alanine | 8.5 |
| Proline | 12.3 |
| Tyrosine | 0.9 |
| Hydroxylysine | 1.7 |
| Valine | 2.4 |
| Methionine | 0.9 |
| Lysine | 3.8 |
| Isoleucine | 1.3 |
| Leucine | 2.7 |
| Phenyalanine | 2.1 |
| **Total** | **100** |

Table 6.2:

| Gelatine concentration 250 bloom *wt%(aq)* | (Hydrolyzed) gelatine source | [HG] *wt% (aq)* | [HG$_{10-40}$] *wt%(aq)* | $X \cdot B_f + Y^1$ | Physical appearance | Success? |
|---|---|---|---|---|---|---|
| 12.8 | - | 0 | 0 | $14.7 \cdot 1 + 0 = 14.7$ | Phase separated gel | No |
| 8.5 | Fully hydrolysed gelatine (table 6.1) | 5 | 0 | $9.3 \cdot 1 + 0 = 9.3$ | Gel phase + liquid phase | No |
| 8.5 | Pork type A; 100 bloom (Gelita) | 1.7 | 0.7 | $9.3 \cdot 1 + 0.7 = 10$ | Phase separated gel | No |
| 8.5 | Pork type A; 0 bloom (Gelita); fraction 1 | 2.5 | 1.3 | $9.3 \cdot 1 + 1.3 = 10.6$ | Gel phase + liquid phase | No |
| 8.5 | Pork type A; 0 bloom (Gelita); fraction 2 | 5 | 3.8 | $9.3 \cdot 1 + 3.9 = 13.2$ | One phase gel | Yes |
| 12.8 | Pork type A; 0 bloom (Gelita) | 1 | 0.7 | $14.7 \cdot 1 + 0.7 = 15.4$ | One phase gel | Yes |
| 8.5 | Pork type A; 0 bloom (Gelita) | 4.8 | 3.4 | $9.3 \cdot 1 + 3.5 = 12.8$ | One phase gel | Yes |

$^1$ *X* and *Y* each being calculated as parts by weight per 100 parts by weight of water

Example 7: Commercial example of a concentrated beef bouillon.

In this example we show that it is possible to prepare a full formulation gelled beef bouillon concentrate, applying the current invention.

Two beef bouillon concentrates were prepared, both having exactly the same formulation, with the difference that to one of the two batches non-gelling hydrolysed gelatine was added (example 7.2), while the other sample was prepared without added non-gelling hydrolysed gelatine (example 7.1). Table 7.1 describes the formulation without added non-gelling hydrolysed gelatine, whereas table 7.2 describes the formulation with added non-gelling hydrolysed gelatine. The samples were prepared according to the processing steps described in Example 1.

**Table 7.1:**

| | per100g | NaCl | sugars | water | NaCl | sugars | water |
|---|---|---|---|---|---|---|---|
| **Material** | *g* | *wt%* | *wt%* | *wt%* | *amount* | *amount* | *amount* |
| Non-gelling hydrolysed gelatine (pork, type A) | 0 | 0.5% | 0% | 5.0% | 0.00 | 0.00 | 0.00 |
| Soup stock | 0 | 6.0% | 0% | 22.0% | 0.00 | 0.00 | 0.00 |
| Beef flavour | 0.9 | 36.0% | 0% | 3.0% | 0.33 | 0.00 | 0.03 |
| Yeast extract | 0.4 | 18.0% | 0.1% | 4.4% | 0.07 | 0.00 | 0.02 |
| Roasted vegetable base | 0.1 | 10.7% | 21.2% | 9.5% | 0.01 | 0.02 | 0.01 |
| Beef extract (80 °Brix) | 6.2 | 5.6% | 0% | 14.7% | 0.35 | 0.00 | 0.91 |
| Carrot juice concentrate | 1.0 | 0.7% | 47.9% | 32.1% | 0.01 | 0.46 | 0.31 |
| Leek juice concentrate | 0.4 | 0.2% | 30.4% | 33.3% | 0.00 | 0.13 | 0.14 |
| Celery juice concentrate | 1.1 | 4.5% | 9.6% | 35.0% | 0.05 | 0.10 | 0.37 |
| Onion juice concentrate | 1.9 | 0.8% | 32.4% | 30.9% | 0.01 | 0.61 | 0.59 |
| Water | 58.6 | 0% | 0% | 100% | 0.00 | 0.00 | 58.6 |
| Salt | 16.4 | 100% | 0% | 0% | 16.4 | 0.00 | 0.00 |
| Gelatine (pork, type A, 250 bloom) | 13.0 | 0.5% | 0% | 14.0% | 0.06 | 0.00 | 1.82 |
| **Total** | **100** | | | | **17.32** | **1.33** | **62.83** |

**Table 7.2:**

| | per100g | NaCl | sugars | water | NaCl | sugars | water |
|---|---|---|---|---|---|---|---|
| **Material** | *G* | *wt%* | *wt%* | *wt%* | *amount* | *amount* | *amount* |
| Non-gelling hydrolysed gelatine (pork, type A) | 2.1 | 0.5% | 0% | 5.0% | 0.01 | 0.00 | 0.11 |
| Soup stock | 5.4 | 6.0% | 0% | 22.0% | 0.33 | 0.00 | 1.20 |
| Beef flavour | 0.9 | 36.0% | 0% | 3.0% | 0.31 | 0.00 | 0.03 |
| Yeast extract | 0.4 | 18.0% | 0.1% | 4.4% | 0.07 | 0.00 | 0.02 |
| Roasted vegetable base | 0.1 | 10.7% | 21.2% | 9.5% | 0.01 | 0.02 | 0.01 |
| Beef extract (80 °Brix) | 5.7 | 5.6% | 0% | 14.7% | 0.32 | 0.00 | 0.84 |
| Carrot juice concentrate | 0.9 | 0.7% | 47.9% | 32.1% | 0.01 | 0.43 | 0.29 |
| Leek juice concentrate | 0.4 | 0.2% | 30.4% | 33.3% | 0.00 | 0.12 | 0.13 |
| Celery juice concentrate | 1.0 | 4.5% | 9.6% | 35.0% | 0.04 | 0.09 | 0.34 |
| Onion juice concentrate | 1.8 | 0.8% | 32.4% | 30.9% | 0.01 | 0.57 | 0.54 |
| Water | 54.0 | 0% | 0% | 100% | 0.00 | 0.00 | 54.0 |
| Salt | 15.1 | 100% | 0% | 0% | 15.1 | 0.00 | 0.00 |
| Gelatine (pork, type A, 250 bloom) | 12.2 | 0.5% | 0% | 14.0% | 0.06 | 0.00 | 1.71 |
| **Total** | **100** | | | | **16.29** | **1.23** | **59.24** |

The first column describes the raw material used; the second column is the wt% of that raw material in the total formulation; the third column is the wt% of sodium chloride per raw material; the fourth column is the wt% of sugars (glucose, fructose and sucrose) per raw material and the fifth column is the wt% of water per raw material.

From both tables it can be deduced that in both samples the level of gelatine 250 bloom is 14.9wt% based on water, taking into account the 85% purity of the gelatine, and the salt level is 21.6wt% based on water. In case of example 7.2, the total level of non-gelling hydrolysed gelatine is 8.9 wt% based on water, taking into account 95% purity of the bloom 0 non-gelling hydrolysed gelatine and 70% purity of the soup stock.

Both samples were stored at room temperature and evaluated after a time of four weeks. The product of example 7.1 was a phase separated, gel and liquid system. The product of example 7.1 could not be evacuated from it packaging in one piece.

The product of example 7.2 was a one phase gel that could be removed from its packaging in one piece. The gel had a glossy appearance. The firmness of this gel was measured according to the method described in the text, and was found to be 56 g. The rheological properties of this gel were determined according to the method described in the text, with the following results:

| G' Pa | G" Pa | G' / G" |
|---|---|---|
| 7880 | 544 | 14.5 |

From example 7 it can be concluded that it is possible to prepare a beef bouillon concentrate in gel format, using only gelatine as gelling agent, at salt and gelatine concentrations where this usually is not possible, using non-gelling hydrolysed gelatine as gelling aid from mixed raw material sources.

Example 8: Commercial example of a concentrated beef bouillon.

In this example we show that it is possible to prepare a full formulation gelled beef bouillon concentrate, applying the current invention.

Two beef bouillon concentrates were prepared, both having exactly the same formulation, with the difference that to one of the two batches non-gelling hydrolysed gelatine was added (example 8.2), while the other sample was prepared without added non-gelling hydrolysed gelatine (example 8.1). Table 8.1 describes the formulation without added non-gelling hydrolysed gelatine, whereas table 8.2 describes the formulation with added non-gelling hydrolysed gelatine. The samples were prepared according to the processing steps described in Example 1.

The first column describes the raw material used; the second column is the wt% of that material in the total formulation; the third column is the wt% of sodium chloride per raw material; the fourth column is the wt% of sugars (glucose, fructose and sucrose) per raw material and the fifth column is the wt% of water per raw material.

From both tables it can be deduced that in both samples the level of gelatine 250 bloom is 10.1 wt% based on water, taking into account the 85% purity of the gelatine, and the salt level is 22.4 wt% based on water. In case of example 8.2, the total level of hydrolysed gelatine is 12.6 wt% based on water, taking into account the 70% purity of the soup stock.

Both samples were stored at room temperature and evaluated after a time of four weeks. The product of example 8.1 was a phase separated, gel and liquid system. The product of example 8.1 could not be evacuated from it packaging in one piece.

**Table 8.1:**

| | per 100g | NaCl | sugars | water | NaCl | sugars | water |
|---|---|---|---|---|---|---|---|
| **Material** | *g* | *%* | *%* | *%* | *amount* | *amount* | *amount* |
| Sugar | 2.15 | 0% | 100% | 0% | 0.00 | 2.15 | 0.00 |
| Soup stock | 0.00 | 6.0% | 0% | 22% | 0.00 | 0.00 | 0.00 |
| Meat base | 1.81 | 40.2% | 0.2% | 1.5% | 0.73 | 0.00 | 0.03 |
| Yeast extract | 1.67 | 0.4% | 0.7% | 4.8% | 0.01 | 0.01 | 0.08 |
| Beef flavour | 1.63 | 36.0% | 0% | 3.0% | 0.59 | 0.00 | 0.05 |
| Karamel | 0.89 | 0.6% | 9.2% | 4.2% | 0.00 | 0.08 | 0.04 |
| Yeast extract | 0.70 | 18.0% | 0.1% | 4.4% | 0.13 | 0.00 | 0.03 |
| Onion flavour | 0.07 | 0.2% | 28.9% | 2.4% | 0.00 | 0.02 | 0.00 |

(continued)

|  | per 100g | NaCl | sugars | water | NaCl | sugars | water |
|---|---|---|---|---|---|---|---|
| **Material** | *g* | *%* | *%* | *%* | *amount* | *amount* | *amount* |
| Pepper flavour | 0.04 | 90.0% | 5.2% | 2.8% | 0.03 | 0.00 | 0.00 |
| Beef extract (65 Brix) | 1.92 | 9.4% | 0.2% | 31.5% | 0.18 | 0.00 | 0.61 |
| Water | 63.23 | 0.0% | 0% | 100% | 0.00 | 0.00 | 63.2 |
| Salt | 17.16 | 100% | 0% | 0% | 17.2 | 0.00 | 0.00 |
| Gelatine (pork, type A, 250 bloom) | 8.73 | 0.5% | 0% | 14.0% | 0.04 | 0.00 | 1.22 |
| **Total** | **100** | | | | **18.87** | **2.27** | **65.29** |

**Table 8.2:**

|  | per 100g | NaCl | sugars | water | NaCl | sugars | water |
|---|---|---|---|---|---|---|---|
| **Material** | *g* | *%* | *%* | *%* | *amount* | *amount* | *amount* |
| Sugar | 1.98 | 0% | 100% | 0% | 0.00 | 1.98 | 0.00 |
| Soup stock | 12.22 | 6.0% | 0% | 22% | 0.73 | 0.00 | 2.69 |
| Meat base | 1.67 | 40.2% | 0.2% | 1.5% | 0.67 | 0.00 | 0.03 |
| Yeast extract | 1.54 | 0.4% | 0.7% | 4.8% | 0.01 | 0.01 | 0.07 |
| Beef flavour | 1.50 | 36.0% | 0% | 3.0% | 0.54 | 0.00 | 0.05 |
| Karamel | 0.82 | 0.6% | 9.2% | 4.2% | 0.00 | 0.07 | 0.03 |
| Yeast extract | 0.65 | 18.0% | 0.1% | 4.4% | 0.12 | 0.00 | 0.03 |
| Onion flavour | 0.07 | 0.2% | 28.9% | 2.4% | 0.00 | 0.02 | 0.00 |
| Pepper flavour | 0.03 | 90.0% | 5.2% | 2.8% | 0.03 | 0.00 | 0.00 |
| Beef extract (65 Brix) | 1.77 | 9.4% | 0.2% | 31.5% | 0.17 | 0.00 | 0.56 |
| Water | 54.96 | 0.0% | 0% | 100% | 0.00 | 0.00 | 55.0 |
| Salt | 14.91 | 100% | 0% | 0% | 14.9 | 0.00 | 0.00 |
| Gelatine (pork, type A, 250 bloom) | 7.88 | 0.5% | 0% | 14.0% | 0.04 | 0.00 | 1.10 |
| **Total** | **100** | | | | **17.22** | **2.09** | **59.52** |

The product of example 8.2 was a one phase gel that could be removed from its packaging in one piece. The gel had a glossy appearance. The firmness of this gel was measured according to the method described in the text, and was found to be 13 g. The rheological properties of this gel were determined according to the method described in the text, with the following results:

| **G'** | **G"** | **G' / G"** |
|---|---|---|
| *Pa* | *Pa* | |
| 2635 | 200 | 13.2 |

From example 8 it can be concluded that it is possible to prepare a beef bouillon concentrate in gel format, using only gelatine as gelling agent, at salt and gelatine concentrations where this usually is not possible, using non-gelling hydrolysed gelatine as gelling aid.

**Claims**

1. A process of preparing a gelled food concentrate, said concentrate comprising:

    a 20-80% by weight of water;
    b 19-22.5% by weight of edible salt based on water, said edible salt being selected from sodium chloride, potassium chloride and combinations thereof;
    c type A gelatine having a bloom strength of at least 80;
    d non-gelling hydrolysed gelatine having a bloom strength of 0 and a molecular weight in the range of 10,000 to 40,000 g/mol; and

    wherein the process comprises combining 100 parts by weight of water with X parts by weight of the type A gelatine and Y parts by weight of the non-gelling hydrolysed gelatine,
    wherein:

    • $3.5 \leq X \cdot B_f \leq 18$
    • $0.5 \leq Y \leq 22$
    • $X \cdot B_f + Y \geq 10.8$
    • $B_f = \dfrac{\sqrt{<B>}}{\sqrt{250}}$ and
    • $< B >$ is the average bloom strength of the type A gelatine.

2. Process according to claim 1, wherein the type A gelatine has a bloom strength of at least 100, preferably of at least 150.

3. Process according to claim 1 or 2, wherein $X \cdot B_f \geq 4$.

4. Process according to any one of the preceding claims, wherein $Y \geq 1$.

5. Process according to any one of the preceding claims, wherein $X \cdot B_f + Y \geq 11.5$.

6. Process according to any one of the preceding claims, wherein $(X \cdot B_f)/Y \geq 1:4$.

7. Process according to any one of the preceding claims, wherein the concentrate comprises at least 0.1% by weight of taste imparting ingredients based on water, said taste imparting ingredients being selected from sugars, edible acids and glutamate

8. Process according to any one of the preceding claims, comprising the steps of:

    a) preparing an aqueous solution of the type A gelatine and the non-gelling hydrolysed gelatine having a temperature of at least 40 °C, said aqueous solution containing less than 5% edible salt based on water;
    b) adding edible salt to the aqueous solution to produce a salted solution having an edible salt concentration of 19-22.5% based on water; and
    c) allowing the salted solution to form a gel.

9. Process according to claim 8, wherein the salted solution is filled into a container prior to step c).

10. A gelled food concentrate, wherein the food concentrate is obtained by a process according to any one of the preceding claims, and wherein the total amount of hydrolysed and non-hydrolysed gelatine material present in the gelled food concentrate shows a bimodal molecular weight distribution as determined by SDS-PAGE analysis, with a maximum above 50,000 g/mol and a maximum in the range of 10,000-35,000 g/mol.

11. Food concentrate according to claim 10, wherein the ratio of the elastic modulus G' to the viscous modulus G" (G':G") is greater than 1, measured for $t < (2\pi)^{-1}$ s at T = 5°C for 24 h, wherein G" is at least 0.1 Pa, wherein G' and G" are recorded in a standard lab rheometer using a temperature controlled Couette geometry of two concentric cylinders, i.e. a serrated cup of 18.085 mm diameter and a serrated bob of 16.66 mm diameter, and wherein the following procedure is followed:

• sample is molten in the oven at 70 °C;
• liquid is transferred hot into the pre-heated (70 °C) cup of the Couette geometry;
• after correctly loading the sample and lowering the bob to the measuring position, the liquid is covered with a layer of mineral oil to minimize the effect of evaporation;
• the temperature of the sample is brought down to 5 °C with a rate of 2.5 °C/min, and the sample is subsequently kept at this temperature for 24 hours;
• during the lowering of the temperature and the 24 hours afterwards, the sample is probed for its visco-elastic properties by oscillating the bob with a frequency of 1 rad/s at a strain of 1%;
• it is checked that a strain of 1% is in the linear visco-elastic regime at the applied frequency.

12. Food concentrate according to claim 10 or 11, wherein the food concentrate comprise 0.1-60 wt% based on water of taste imparting ingredients selected from sugars, edible acids and glutamate.

13. Food concentrate according to any one of claims 10-12, wherein the food concentrate has a water activity ($a_w$) between 0.5 and 0.98.

14. Food concentrate according to anyone of claims 10-13, wherein the food concentrate is a bouillon concentrate, a seasoning, a soup concentrate, a sauce concentrate, a gravy concentrate, or meal maker concentrate.

15. Use of the gelled food concentrate according to any one of claims 10-14, in the preparation of a bouillon, a soup, a sauce, a gravy or a seasoned dish.

**Patentansprüche**

1. Verfahren zur Herstellung eines gelierten Nahrungsmittelkonzentrats, wobei das Konzentrat Folgendes umfasst:

a 20 bis 80 Gew.-% Wasser;
b 19 bis 22,5 Gew.-% essbares Salz auf der Grundlage von Wasser, wobei das essbare Salz aus Natriumchlorid, Kaliumchlorid und Kombinationen davon gewählt ist;
c Gelatine des Typs A, die eine Bloom-Stärke von mindestens 80 besitzt; und
d nicht gelierende hydrolysierte Gelatine, die eine Bloom-Stärke von 0 und ein Molekulargewicht von 10.000 bis 40.000 g/mol besitzt; wobei

das Verfahren ein Kombinieren von 100 Gewichtsteilen Wasser mit $X$ Gewichtsteilen der Gelatine des Typs A und $Y$ Gewichtsteilen der nicht gelierenden hydrolysierten Gelatine umfasst, wobei

• $3,5 \leq X \cdot B_f \leq 18$
• $0,5 \leq Y \leq 22$
• $X \cdot B_f + Y \geq 10,8$
• $$B_f = \frac{\sqrt{<B>}}{\sqrt{250}}$$ und
• $<B>$ die durchschnittliche Bloom-Stärke der Gelatine des Typs A ist.

2. Verfahren nach Anspruch 1, wobei die Gelatine des Typs A eine Bloom-Stärke von mindestens 100 und vorzugsweise von mindestens 150 besitzt.

3. Verfahren nach Anspruch 1 oder 2, wobei $X \cdot B_f \geq 4$.

4. Verfahren nach irgendeinem der vorhergehenden Ansprüche, wobei $Y \geq 1$.

5. Verfahren nach irgendeinem der vorhergehenden Ansprüche, wobei $X \cdot B_f + Y \geq 11,5$.

6. Verfahren nach irgend einem der vorhergehenden Ansprüche, wobei $(X \cdot B_f) / Y \geq 1{:}4$.

7. Verfahren nach irgendeinem der vorhergehenden Ansprüche, wobei das Konzentrat mindestens 0,1 Gew.-% geschmackverleihende Bestandteile auf der Grundlage von Wasser umfasst, wobei die geschmackverleihende Bestandteile aus Zuckern, essbaren Säuren und Glutamat gewählt sind.

8. Verfahren nach irgendeinem der vorhergehenden Ansprüche, der die folgenden Schritte umfasst:

a) Herstellung einer wässrigen Lösung der Gelatine des Typs A und der der nicht gelierenden hydrolysierten Gelatine, die eine Temperatur von mindestens 40 °C besitzt, wobei die wässrige Lösung weniger als 5 % essbares Salz auf der Grundlage von Wasser enthält;
b) Hinzufügen essbaren Salzes zur wässrigen Lösung, um eine salzige Lösung, die eine Konzentration essbaren Salzes von 19 bis 22,5 % auf der Grundlage von Wasser besitzt, herzustellen; und
c) Ermöglichen, dass die salzige Lösung ein Gel bildet.

9. Verfahren nach Anspruch 8, wobei die salzige Lösung vor Schritt c) in einen Behälter gefüllt wird.

10. Geliertes Nahrungsmittelkonzentrat, wobei das Nahrungsmittelkonzentrat durch ein Verfahren nach irgendeinem der vorhergehenden Ansprüche erhalten wird und die Gesamtmenge hydrolysierten und nicht hydrolysierten Gelatinematerials, die im gelierten Nahrungsmittelkonzentrat vorhanden ist, eine bimodale Molekulargewichtsverteilung, wie sie durch SDS-PAGE-Analyse bestimmt wird, mit einem Maximum über 50.000 g/mol und einem Maximum in dem Bereich von 10.000 bis 35.000 g/mol zeigt.

11. Nahrungsmittelkonzentrat nach Anspruch 10, wobei das Verhältnis des Elastizitätsmoduls G' zum Viskositätsmodul G" (G' : G"), das für $t < (2\pi)^{-1}$ s bei T = 5 °C für 24 h gemessen wurde, größer als 1 ist, wobei G" mindestens 0,1 Pa ist, G' und G" in einem Normlabor-Rheometer unter Verwendung einer temperaturgesteuerten Couette-Geometrie von zwei konzentrischen Zylindern, d. h. ein geriffelter Messbecher von 18,058 mm Durchmesser und ein geriffelter Messkörper von 16,66 mm Durchmesser, aufgezeichnet werden und der folgenden Prozedur gefolgt wird:

• die Probe wird im Ofen bei 70 °C geschmolzen;
• die Flüssigkeit wird heiß in den vorgeheizten (70 °C) Messbecher der Couette-Geometrie übertragen;
• nach dem korrekten Laden der Probe und dem Absenken des Messkörpers zur Messposition wird die Flüssigkeit mit einer Schicht von Mineralöl abgedeckt, um die Wirkung einer Verdunstung zu minimieren;
• die Temperatur der Probe wird mit einer Rate von 2,5 °C/min auf 5 °C heruntergebracht und die Probe wird anschließend für 24 Stunden auf dieser Temperatur gehalten;
• während des Absenkens der Temperatur und der anschließenden 24 Stunden wird die Probe durch Oszillieren des Messkörpers mit einer Frequenz von 1 rad/s bei einer Dehnung von 1 % hinsichtlich ihrer viskoelastischen Eigenschaften untersucht und
• es wird geprüft, dass eine Dehnung von 1 % bei der verwendeten Frequenz im linearen viskoelastischen Bereich liegt.

12. Nahrungsmittelkonzentrat nach Anspruch 10 oder 11, wobei das Nahrungsmittelkonzentrat 0,1 bis 60 Gew.-% auf der Grundlage von Wasser geschmackverleihender Bestandteile, die aus Zuckern, essbaren Säuren und Glutamat gewählt sind, umfasst.

13. Nahrungsmittelkonzentrat nach irgendeinem der Ansprüche 10-12, wobei das Nahrungsmittelkonzentrat eine Wasseraktivität ($a_w$) von 0,5 bis 0,98 besitzt.

14. Nahrungsmittelkonzentrat nach irgendeinem der Ansprüche 10-13, wobei das Nahrungsmittelkonzentrat ein Bouillon-Konzentrat, ein Gewürz, ein Suppenkonzentrat, ein Saucenkonzentrat, ein Bratensaftkonzentrat oder ein Fleischersatz-Konzentrat ist.

15. Verwendung des gelierten Nahrungsmittelkonzentrats nach irgendeinem der Ansprüche 10-14 beim Zubereiten einer Bouillon, einer Suppe, einer Sauce, einer Bratensoße oder einer gewürzten Speise.

**Revendications**

1. Procédé de préparation d'un concentré alimentaire gélifié, ledit concentré comprenant :

a 20-80 % en masse d'eau ;

b 19-22,5 % en masse de sel comestible sur la base de l'eau, ledit sel comestible étant choisi parmi le chlorure de sodium, chlorure de potassium et combinaisons de ceux-ci ;
c de la gélatine de type A présentant un degré Bloom d'au moins 80 ;
d de la gélatine hydrolysée non-gélifiée présentant un degré Bloom de 0 et une masse moléculaire dans l'intervalle de 10 000 à 40 000 g/mol ; et

dans lequel le procédé comprend la combinaison de 100 parties en masse d'eau avec $X$ parties en masse de la gélatine de type A et $Y$ parties en masse de la gélatine hydrolysée non gélifiée,
dans lequel :

- $3.5 \leq X \cdot B_f \leq 18$
- $0.5 \leq Y \leq 22$
- $X \cdot B_f + Y \geq 10.8$
- $B_f = \dfrac{\sqrt{<B>}}{\sqrt{250}}$ et
- $<B>$ est le degré Bloom moyen de la gélatine de type A.

2. Procédé selon la revendication 1, dans lequel la gélatine de type A présente un degré Bloom d'au moins 100, de préférence d'au moins 150.

3. Procédé selon la revendication 1 ou 2, dans lequel $X \cdot B_f \geq 4$.

4. Procédé selon l'une quelconque des revendications précédentes, dans lequel $Y \geq 1$.

5. Procédé selon l'une quelconque des revendications précédentes, dans lequel $X \cdot B_f + Y \geq 11,5$.

6. Procédé selon l'une quelconque des revendications précédentes, dans lequel $(X \cdot B_f)/Y \geq 1{:}4$.

7. Procédé selon l'une quelconque des revendications précédentes, dans lequel le concentré comprend au moins 0,1 % en masse d'ingrédients communiquant du goût sur la base de l'eau, lesdits ingrédients communiquant du goût étant choisis parmi des sucres, des acides comestibles et du glutamate.

8. Procédé selon l'une quelconque des revendications précédentes, comprenant les étapes de :

a) préparation d'une solution aqueuse de la gélatine de type A et de la gélatine hydrolysée non gélifiée présentant une température d'au moins 40°C, ladite solution aqueuse contenant moins de 5 % de sel comestible sur la base de l'eau ;
b) addition de sel comestible à la solution aqueuse pour produire une solution salée ayant une concentration en sel comestible de 19-22,5 % sur la base de l'eau ; et
c) laisser la solution salée former un gel.

9. Procédé selon la revendication 8, dans lequel la solution salée est chargée dans un récipient avant l'étape c).

10. Concentré alimentaire gélifié, dans lequel le concentré alimentaire est obtenu par un procédé selon l'une quelconque des revendications précédentes, et dans lequel la quantité totale de matériau de gélatine hydrolysée et non-hydrolysée présent dans le concentré alimentaire gélifié présente une distribution de masse moléculaire bimodale comme déterminée par analyse SDS-PAGE, avec un maximum supérieur à 50 000 g/mol et un maximum dans l'intervalle de 10 000-35 000 g/mol.

11. Concentré alimentaire selon la revendication 10, dans lequel le rapport du module élastique G' au module visqueux G" (G':G") est supérieur à 1, mesuré pour $t < (2\pi)^{-1}$ s à T = 5°C pendant 24 h, dans lequel G" est au moins 0,1 Pa, dans lequel G' et G" sont enregistrés dans un rhéomètre de laboratoire standard en utilisant une géométrie Couette contrôlée en température de deux cylindres concentriques, c'est-à-dire un bol strié de diamètre 18,085 mm et un balancier strié de diamètre 16,66 mm, et dans lequel la procédure suivante est suivie :

- l'échantillon est fondu dans le four à 70°C ;
- du liquide est transféré chaud dans le bol préchauffé (70°C) de la géométrie Couette ;

• après charge correcte de l'échantillon et abaissement du balancier vers la position de mesure, le liquide est recouvert avec une couche d'huile minérale pour minimiser l'effet d'évaporation ;

• la température de l'échantillon est abaissée à 5°C avec une vitesse de 2,5°C/min, et l'échantillon est ensuite maintenu à cette température pendant 24 heures ;

• pendant l'abaissement de la température et les 24 heures suivantes, l'échantillon est sondé pour ses propriétés visco-élastiques par oscillation du balancier avec une fréquence de 1 rad/s à une contrainte de 1 % ;

• il est surveillé qu'une contrainte de 1 % se trouve dans le régime visco-élastique linéaire à la fréquence appliquée.

12. Concentré alimentaire selon la revendication 10 ou 11, dans lequel le concentré alimentaire comprend 0,1-60 % en masse sur la base d'eau d'ingrédients communiquant du goût choisis parmi des sucres, des acides comestibles et du glutamate.

13. Concentré alimentaire selon l'une quelconque des revendications 10-12, dans lequel le concentré alimentaire présente une activité d'eau ($a_w$) de 0,5 à 0,98.

14. Concentré alimentaire selon l'une quelconque des revendications 10-13, dans lequel le concentré alimentaire est un concentré de bouillon, un assaisonnement, un concentré pour soupe, un concentré pour sauce, un concentré pour jus de viande, ou un concentré pour fabrication de repas.

15. Utilisation du concentré alimentaire gélifié selon l'une quelconque des revendications 10-14, dans la préparation d'un bouillon, d'une soupe, d'une sauce, d'un jus de viande ou d'un plat assaisonné.

# Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 672354 A
- JP 2011234654 A
- WO 2007068483 A
- WO 2007068402 A
- WO 2007068484 A
- EP 2468110 A
- WO 2012062919 A
- WO 2015091220 A
- WO 2016050454 A
- WO 2016050456 A
- US 5780090 A
- WO 2012097930 A
- WO 02089608 A

**Non-patent literature cited in the description**

- **THOMAS MEZGER ; CURT R.** Das Rheologie Handbuch. Vincentz-Verlag, 2000